# EUROPÄISCHE PATENTSCHRIFT

(11) **EP 1 159 585 B1**
(45) Veröffentlichungstag und Bekanntmachung des Hinweises auf die Patenterteilung: **28.11.2007**
(21) Anmeldenummer: 00987078.3
(22) Anmeldetag: 04.11.2000
(51) Int. Cl.: G01C 21/32, G09B 29/10, G08G 1/0969, G06F 17/30

(54) **VERFAHREN ZUM BETRIEB EINES NAVIGATIONSSYSTEMS**
METHOD FOR OPERATING A NAVIGATION SYSTEM
PROCEDE D'EXPLOITATION D'UN SYSTEME DE NAVIGATION

(30) Priorität: 30.12.1999 DE 19963766
(43) Veröffentlichungstag der Anmeldung: 05.12.2001
(73) Patentinhaber: ROBERT BOSCH GMBH, 70442 Stuttgart (DE)
(72) Erfinder: WINTER, Stephan, 30159 Hannover (DE); HESSING, Bernd, 31188 Holle (DE); JUNG, Thomas, 60314 Frankfurt (DE); NORDSIEK, Walter, 31188 Holle (DE); BINNEWIES, Olaf, 31134 Hildesheim (DE); FABIAN, Thomas, 31139 Hildesheim (DE); RENTEL, Bettina, 31180 Giesen (DE); OTTE, Dirk, 30880 Laatzen (DE); TIEMANN, Dirk, 30657 Hannover (DE)
(86) Internationale Anmeldenummer: PCT/DE2000/003878
(87) Internationale Veröffentlichungsnummer: WO 2001/050089

(56) Entgegenhaltungen:
- EP-A- 0 838 663
- EP-A- 0 945 706
- WO-A-99/58934
- US-A- 5 953 722

## Beschreibung

### Technisches Gebiet

Die Erfindung betrifft ein Verfahren zum Betrieb eines Navigationssystems mit einer digitalen Kartenbasis, welche ein Abbild von realen geographischen Bereichen ist und Daten von geographischen Elementen enthält, sowie mit einem die Daten abrufenden und verarbeitenden Gerät, wie ein Bedienteil mit Anzeigeeinrichtung, wobei die Daten in der digitalen Kartenbasis in Form von geographisch definierten Kacheln zusammen gefasst sind, gemäß dem Oberbegriff des Anspruchs 1.

### Stand der Technik

In Fortbewegungsmitteln, wie beispielsweise Kraftfahrzeugen, Flugzeugen oder Schiffen, fest installierte Navigationssysteme leiten einen Führer des Fortbewegungsmittels schnell, einfach und sicher an einen gewünschten Zielort, ohne dass vorher aufwendig eine Route geplant und entsprechendes Kartenmaterial erworben bzw. studiert werden muss. Hierzu liegen entsprechende, beispielsweise auf Karten, Landkarten oder Straßenkarten basierende, Navigationsdaten in dem Navigationssystem beispielsweise auf CD-ROM als digitale Kartenbasis gespeichert vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen. Die Navigationsdaten beinhalten dabei beispielsweise Daten über Straßen und Wege für Kraftfahrzeuge sowie weitergehende geographische Informationen, wie beispielsweise Berge, Seen, Wälder, Bebauung oder sonstige topographische Elemente, oder weitergehende Informationen, wie Restaurants, Hotels, Sehenswürdigkeiten oder sonstige Informationen.

Hierbei ist die digitale Kartenbasis im wesentlichen ein Abbild des realen Straßennetzes sowie der entsprechenden geographischen Umgebung. Diese Informationen aus der digitalen Kartenbasis werden an einem Bedienteil zur Information des Fahrers auf einem Display angezeigt, wobei zur Erhaltung der Übersichtlichkeit der Darstellung in unterschiedlichen Situationen der Detailgrad bzw. die Anzahl der dargestellten geographischen Merkmale unterschiedlich zu wählen ist. So werden beispielsweise auf einer Übersichtskarte nur Autobahnen dargestellt, während eine Innenstadtkarte Details bis zur Wohnbebauung enthalten soll. Diese Wahl der dargestellten Details der Karte beeinflußt ganz wesentlich die Übersichtlichkeit und Lesbarkeit von auf der Grundlage der digitalen Kartenbasis dargestellten Karten, was besonders bei Darstellungen in Fahrzeugen wichtig ist, da ein Fahrer mit möglichst einem Blick alle notwendigen Informationen für die Routenführung erfassen können soll. Hierbei können die Kartendarstellungen sinnvoll nicht nach allgemein festgelegten Regeln erstellt werden, sondern es ist eine relative Wichtung der Darstellungselemente notwendig. Beispielsweise darf eine Übersichtskarte des Ruhrgebietes sinnvollerweise nicht alle Autobahnen enthalten. Eine Karte mit dem gleichen Maßstab in Arizona könnte demgegenüber durchaus sehr kleine Straßen sinnvollerweise enthalten.

Bei Navigationssystemen für Kraftfahrzeuge ist es sinnvoll, das Navigationsmodul, welches die digitale Kartenbasis zur Verfügung stellt, von den darstellenden Geräten zu trennen und auch getrennt voneinander zu entwickeln. Hierbei ist dann eine vordefinierte Schnittstelle zum Zugriff auf die digitale Kartenbasis des Navigationsmoduls notwendig. Diese Schnittstelle muß es ermöglichen im darstellenden Gerät in unterschiedlichen Maßstäben digitale Karten mit guter Übersichtlichkeit zu erstellen.

Derartige Schnittstellen sind beispielsweise von den Firmen NAVTECH (http://www.navtech.com) oder Etak Inc. (http://www.etak.com) bekannt. Diese Schnittstellen ermöglichen einen Zugriff auf das physikalische Speicherformat der digitalen Kartenbasis. In unterschiedlichen Fahrzeugen werden allerdings unterschiedliche digitale Kartenbasen eingesetzt. Außerdem kann es beim Zugriff durch das Navigationsmodul, beispielsweise für interne Routenberechnung, und Bedienteilrechner, beispielsweise zur Erzeugung einer Darstellung eines Ausschnitts der digitalen Kartenbasis auf dem Anzeigegerät, zu Zugriffskonflikten kommen. Weiterhin sind in den digitalen Kartenbasen die enthaltenen Elemente "direkt" beschrieben, d.h. eine Autobahn ist eine Straße der Klasse "Motorway" mit einer Nummer. Es hat sich gezeigt, dass eine Standardisierung und Einigung über die Klassifizierung von Kartenelementen nur auf einem sehr unbefriedigenden, für eine Darstellungserzeugung nicht tauglichen Niveau möglich ist.

Die Bereitstellung der Daten für die Darstellung auf dem Anzeigegerät am Bedienteil eines Navigationssystems erfolgt häufig in Form von geographisch definierten Kacheln. Ein Kachelnetz wird dadurch gebildet, dass die Erdoberfläche für die Karte in ein Netz von Kacheln gleicher geographischer Ausdehnung eingeteilt wird, vergleichbar mit den Planquadraten einer herkömmlichen gedruckten Karte. Jedes Planquadrat entspricht dabei einer Kachel. Das Bedienteil ruft eine Kachel ab und stellt diese auf dem Anzeigegerät dar. Ferner werden die in der Kachel enthaltenen Informationen zur Routenberechnung verwendet. Dies hat einerseits den Vorteil, dass eine einfache Bestimmung der aus der digitalen Kartenbasis anzufordernden Daten realisiert ist, indem einfach eine Kachel aufgerufen wird und alle in dieser Kachel enthaltene Daten über geographische Elemente übertragen werden. Ferner wird eine Entkopplung von Bildschirmausschnitt und Datenhaltung erzielt. Andererseits ist es jedoch ein erheblicher Nachteil der Kacheln, dass ggf. interessante Daten oder Informationen außerhalb der jeweiligen Kachel bzw. am Kachelrand nicht zur Verfügung stehen, da diese mittels sogen. "Clippen" abgeschnitten und nicht mitübertragen werden. Das Dokument WO 99/58934 A zeigt ein solches Verfahren. Ferner müssen Daten an Kachelrändern zur Routenberechnung ggf. berechnet werden. Rundungsfehler treten dann auf, wenn an einer Kachelgrenze beispielsweise eine von einem Startpunkt ausgehende Linie durch "Abrunden" auf eine auf dem Kachelrand liegende Koordinate gerundet wird. Bei der Nachbarkachel kann die vom Endpunkt der Linie berechnete, auf dem Kachelrand liegende Koordinate durch "Aufrunden" auf eine andere Koordinate gerundet werden. Die Kachelkoordinaten der Linie liegen dann am Kachelrand nicht aufeinander. Das Verfahren zur Bestimmung der Kachelrandkoordinaten ("Clipping") ist daher aufwendig und fehleranfällig.

### Darstellung der Erfindung, Aufgabe, Lösung, Vorteile

Es ist Aufgabe der vorliegenden Erfindung, ein verbessertes Verfahren der obengenannten Art zur Verfügung zu stellen, welches die obengenannten Nachteile beseitigt und eine flexiblere und wirklichkeitsnähere Darstellung erzielt.

Diese Aufgabe wird durch ein Verfahren der o.g. Art mit den in Anspruch 1 gekennzeichneten Merkmalen gelöst.

Dazu ist erfindungsgemäß vorgesehen, dass bei Anforderung einer Kachel aus der digitalen Datenbasis Daten von geographischen Elementen, welche eine Ausdehnung über den Kachelrand hinaus aufweisen, derart übertragen werden, dass auch Daten bzgl. dieser geographischen Elemente außerhalb der angeforderten Kachel gesammelt und übertragen werden.

Dies hat den Vorteil, dass einerseits das Daten abrufende Gerät die Kachelgröße selbst nicht kennen muß und eine Kachel lediglich mittels Angabe eines Koordinatenpaares abrufen kann und andererseits auch Daten benachbart zum Kachelrand außerhalb der Kachel von den Kachelrand überlappenden geographischen Elementen vorliegen. Ein "Clipping" an Kachelgrenzen ist nicht erforderlich. Ferner kann eine von der Kachelgröße unabhängige "Karte" zur Darstellung auf dem Anzeigegerät zusammengesetzt werden, so dass Kachelgrenzen in der Darstellung nicht zwangsläufig sichtbar werden. Darüber hinaus sind Brüche in der Kartendarstellung, welche sonst durch Rundungsfehler bei "Clipping"-Algorithmen an den Kachelgrenzen auftreten, vermieden.

Vorteilhafte Weiterbildungen des Verfahrens sind in den abhängigen Ansprüchen 2 bis 5 beschrieben.

So werden bei der Anforderung einer Kachel zusätzlich Daten von geographischen Elementen übertragen, welche zwar außerhalb der angeforderten Kachel aber benachbart zum Kachelrand der angeforderten Kachel innerhalb eines vorbestimmten Bereiches liegen.

Eine Kachelanforderung ohne Kenntnis des internen Koordinatenformats der digitalen Kachel sowie ohne Kenntnis der Größe der Kachel wird dadurch erzielt, dass die Anforderung einer Kachel über geographische Koordinaten parametriert wird.

Sofern bestimmte Datenelemente, wie beispielsweise Hotels, Eisenbahnlinien, Restaurants o.ä., im Daten abrufenden und verarbeitenden Gerät bekannt sind, erfolgt eine Anforderung einer Kachel zweckmäßigerweise durch Einschluss und/oder Ausschluss von derartigen in der Kachel enthaltenen Datenelementen.

In einer bevorzugten Ausführungsform werden bei Anforderung einer Kachel aus der digitalen Datenbasis zusätzlich Daten zur angeforderten Kachel übertragen, welche Angaben über Kachelgröße, Ausdehnung der Kachel, maximale Ausdehnung mit benachbarten und herausragenden geografischen Elementen und/oder weitere, die Kachel beschreibende Informationen umfassen dadurch, dass zusätzlich in der Kachel enthaltene Datenelemente übertragen werden, kann das Daten anfordernde und verarbeitende Gerät nachfolgende Anforderung von Daten dahingehend optimieren, dass ggf. nicht mehr alle in der Kachel enthaltene Datenelemente übertragen, sondern einzelne Gruppen von Datenelementen, wie beispielsweise Straßen, Wege, Hotels, Eisenbahnlinien, Restaurants o.ä., bei der Anforderung der Kachel ausgeschlossen werden.

### Kurze Beschreibung der Zeichnungen

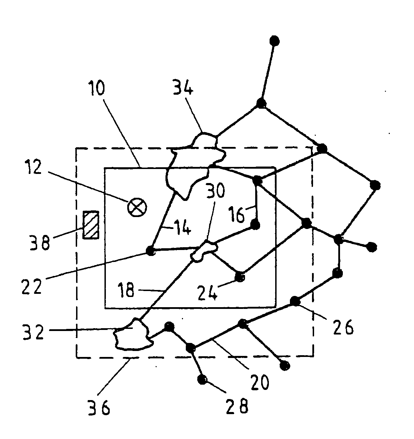

Nachstehend wird die Erfindung anhand der beigefügten Zeichnung näher erläutert. Diese zeigt in der einzigen Fig. eine Aufteilung von Navigationsdaten in geographische Kacheln.

### Bester Weg zur Ausführung der Erfindung

Bei der in der einzigen Fig. dargestellten Aufteilung einer digitalen Kartenbasis in verschiedene Kacheln ist nur eine Kachel 10 explizit dargestellt. Weitere Kacheln schließen an diese Kachel 10 oben, unten, rechts und links entsprechend an. Beim Abruf von Navigationsdaten innerhalb eines Navigationssystems aus der digitalen Kartenbasis wird lediglich eine Koordinate 12 übergeben. In dem die digitale Kartenbasis verwaltenden Gerät wird dieser Koordinate die Kachel 10 zugeordnet, in der dieser Koordinatenpunkt liegt. Daraufhin werden alle Daten von geographischen Elementen zusammen gesammelt und an das abrufende Gerät, wie beispielsweise ein Bedienteil mit Anzeigegerät, übertragen. Diese Daten betreffen bzw. beschreiben geographische Elemente, wie beispielsweise Straßen 14, 16, 18, 20, Knoten 22, 24, 26, 28 oder Ballungszentren 30, 32, 34. Hierbei liegen die Straßen 14, 16, die Knoten 22, 24 und das Ballungszentrum 30 vollständig innerhalb der Kachel 10, während Straße 18 und Ballungszentrum 34 die Kachelgrenze überlappen.

Erfindungsgemäß werden zusätzlich alle Daten von geographischen Elementen gesammelt und übertragen, welche die Kachelgrenze überlappen, so dass von diesen geographischen Elemente auch Daten außerhalb der Kachel 10 im Daten abrufenden Gerät vorhanden sind. Dies betrifft beispielsweise die Straße 18 und das Ballungszentrum 34.

Ferner werden optional Daten von solchen geographischen Elementen gesammelt und übertragen, welche zwar weder innerhalb der Kachel 10 liegen, noch den Kachelrand überlappen, sich jedoch innerhalb eines bestimmten Bereiches 36 benachbart zur Kachel 10 befinden. Dies betrifft in der einzigen Fig. die Straße 20, den Knoten 26, das Ballungszentrum 32 und einen Wald 38.

Die Anforderung der Daten erfolgt also in Einheiten von Kacheln über geographische Koordinaten. Die Kacheln werden dabei ohne "Clipping" aufbereitet, d.h. Teile der Daten können außerhalb der Kachelränder liegen. Aufgrund einer Kachelanforderung werden alle, auch nur teilweise, in den Kachelgrenzen liegenden Dateninhalte zusammengesucht und gemeldet. Die eine Kachelgrenze überlappenden geographischen Elemente sind auch in den jeweiligen Nachbarkacheln enthalten. Das die Kacheldaten nutzende Gerät und das die Daten liefernde Gerät sind bestmöglich voneinander entkoppelt.

Hierdurch ist eine einfache Bestimmung der benötigten Dateninhalte über die geographische Definition der Kacheln möglich. Dazu werden übliche Koordinatensysteme (WGS84) angewendet. Damit ist das Zugriffsverfahren unabhängig vom physikalischen Datenformat, insbesondere vom Codierungsverfahren für Geokoordinaten auf Datenträgern.

Zum Zugriff auf eine Kachel ist nur ein Koordinatenpaar 12 erforderlich. Das anfordernde Gerät muss die Kachelgröße vor dem ersten Zugriff nicht kennen. Dies ermöglicht eine einfache Berechnung der in einer Kachel liegenden Kartenelemente im Datenserver. Es ist keine Notwendigkeit gegeben, an den Kachelgrenzen ein "Clipping" durchführen zu müssen. Durch Identität der in benachbarten Kacheln enthaltenen geographischen Elemente kann dort aus einzelnen Kacheln 10 eine "Karte" zusammengebaut werden, welche unabhängig von der Kachelgröße ist. Kachelgrenzen werden in dieser Karte dann nicht zwangsläufig erkennbar. Es kann nicht zu Brüchen in der Kartendarstellung kommen, welche sonst durch Rundungsfehler bei Clipping-Algorithmen auftreten. Die Schnittstelle kann auch zwischen einem außerhalb des Fahrzeugs angesiedelten Datenserver und dem Navigationssystem angewendet werden (Luftschnittstelle, Telematik). Wenn dem anfordernden Gerät der mögliche Inhalt der Kachel bekannt ist, wie etwa Straßen, Flüsse und Eisenbahnlinien, dann kann das Gerät die einzuschließenden und auszuschließenden Dateninhalte bei der Anforderung benennen, also beispielsweise nur Straßen abrufen und alle Eisenbahnen ausschließen.

Die in einer Kachel liegenden Inhalte können in der Antwort angekündigt werden. Hierdurch kann das anfragende Gerät die nächste Anforderung von Kacheln besser konfigurieren, beispielsweise durch entsprechende Einschlüsse oder Ausschlüsse.

Die Ausdehnung einer Kachel kann in der Antwort mitgeteilt werden, die typische Ausdehnung, die maximale Ausdehnung, d. h. mit herausragenden Kachelinhalten. Damit kann die nächste Anforderung, beispielsweise der Nachbarkacheln, konfiguriert werden.

## Patentansprüche

1. Verfahren zum Betrieb eines Navigationssystems mit einer digitalen Kartenbasis, welche ein Abbild von realen geographischen Bereichen ist und Daten von geographischen Elementen (14-34) enthält, sowie mit einem die Daten abrufenden und verarbeitenden Gerät, wie ein Bedienteil mit Anzeigeeinrichtung, wobei die Daten in der digitalen Kartenbasis in Form von geographisch definierten Kacheln zusammen gefasst sind,
**dadurch gekennzeichnet, dass**
bei Anforderung einer Kachel (10) aus der digitalen Datenbasis Daten von geographischen Elementen, welche eine Ausdehnung über den Kachelrand hinaus aufweisen (18,34), derart übertragen werden, dass auch Daten bzgl. dieser geographischen Elemente außerhalb der angeforderten Kachel (10) gesammelt und übertragen werden.

2. Verfahren nach Anspruch 1,
**dadurch gekennzeichnet, dass**
bei der Anforderung einer Kachel (10) zusätzlich Daten von geographischen Elementen (20,26,32,38) übertragen werden, welche zwar außerhalb der angeforderten Kachel aber benachbart zum Kachelrand der angeforderten Kachel innerhalb eines vorbestimmten Bereiches (36) liegen.

3. Verfahren nach Anspruch 1 oder 2,
**dadurch gekennzeichnet, dass**
die Anforderung einer Kachel über geographische Koordinaten parametriert wird.

4. Verfahren nach einem der vorhergehenden Ansprüche,
**dadurch gekennzeichnet, dass**
die Anforderung einer Kachel durch Einschluss und/oder Ausschluss von in der Kachel enthaltenen Datenelementen, wie beispielsweise Straßen, Wege, Hotels, Eisenbahnlinien, Restaurants o.ä., parametriert wird.

5. Verfahren nach einem der vorhergehenden Ansprüche,
**dadurch gekennzeichnet, dass**
bei Anforderung einer Kachel aus der digitalen Datenbasis zusätzlich Daten zur angeforderten Kachel übertragen werden, welche Angaben über Kachelgröße, Ausdehnung der Kachel, maximale Ausdehnung mit benachbarten und herausragenden geografischen Elementen, in der Kachel enthaltenen Datenelementen und/oder weitere, die Kachel beschreibende Informationen umfassen.

## Claims

1. Method for operating a navigation system with a digital map base which is a representation of real geographic regions and contains data relating to geographic elements (14-34), and having a device which calls and processes the data, such as an operator control component with display device, wherein the data are combined in the digital map base in the form of geographically defined tiles, **characterized in that** when a tile (10) is requested from the digital data base, data relating to geographic elements (18, 34) which extend beyond the edge of the tile are transmitted in such a way that data relating to these geographic elements outside the requested tile (10) are also collected and transmitted.

2. Method according to Claim 1, **characterized in that** when a tile (10) is requested, data relating to geographic elements (20, 26, 32, 38) which are outside the requested tile but adjacent to the edge of the requested tile within a predetermined region (36) are additionally transmitted.

3. Method according to Claim 1 or 2, **characterized in that** the request for a tile is parameterized by means of geographic coordinates.

4. Method according to one of the preceding claims, **characterized in that** the request for a tile is parameterized by including and/or excluding data elements contained in the tile, for example, roads, paths, hotels, railway lines, restaurants or the like.

5. Method according to one of the preceding claims, **characterized in that** when a tile is requested from the digital data base, data which relates to the requested tile and which additionally comprises information about the size of the tile, the extent of the tile, the maximum extent with adjacent and salient geographic elements, data elements contained in the tile and/or further information which describes the tile are additionally transmitted.

## Revendications

1. Procédé de gestion d'un système de navigation comportant une base de carte numérique qui est une image de zones géographies réelles et des données d'éléments géographiques (14-34) ainsi qu'un appareil appelant et traitant les données et une partie de commande avec un dispositif d'affichage, les données étant réunies dans la carte numérique de base sous la forme de cases géographiques définies,
**caractérisé en ce qu'**
à la demande d'une case (10), les données d'éléments géographiques des données numériques de base et qui dépassent de l'extension du bord de la base (18, 34) sont transmises de façon que les données concernant l'élément géographique situé à l'extérieur de la case demandée (10) soient également regroupées et transmises.

2. Procédé selon la revendication 1,
**caractérisé en ce qu'**
à la demande d'une case (10), on transmet en plus les données d'éléments géographiques (20, 26, 32, 38) qui se situent certes à l'extérieur de la case demandée mais qui sont voisins du bord de la case demandée dans une certaine plage prédéfinie (36).

3. Procédé selon la revendication 1 ou 2,
**caractérisé en ce que**
la demande d'une case est paramétrée par des coordonnées géographiques.

4. Procédé selon l'une des revendications précédentes,
**caractérisé en ce que**
la demande d'une case est paramétrée par l'inclusion et/ou l'exclusion d'éléments de données contenus dans la case comme par exemple des routes, des chemins, des hôtels, des lignes de chemin de fer, des restaurants ou autres.

5. Procédé selon l'une des revendications précédentes,
**caractérisé en ce qu'**
à la demande d'une case, on transmet à partir de la base de données numériques en plus des données concernant la case, et qui contiennent des indications sur les dimensions de la case, l'extension de la case, l'extension maximale avec des éléments géographiques voisins et qui dépassent dans les éléments de données contenus dans la case et/ou d'autres informations décrivant la case.
